# EUROPÄISCHE PATENTSCHRIFT

(11) **EP 1 203 235 B1**
(45) Veröffentlichungstag und Bekanntmachung des Hinweises auf die Patenterteilung: **28.01.2004**
(21) Anmeldenummer: 00915200.0
(22) Anmeldetag: 06.04.2000
(51) Int. Cl.: G01N 33/543

(54) **VORRICHTUNG ZUR PROZESSIERUNG VON ANALYTEN AN FESTPHASEN**
DEVICE FOR PROCESSING ANALYTES IN SOLID PHASES
DISPOSITIF POUR TRAITER DES ANALYTES SUR DES PHASES SOLIDES

(30) Priorität: 20.07.1999 DE 19933153
(43) Veröffentlichungstag der Anmeldung: 08.05.2002
(73) Patentinhaber: ALTANA Pharma AG, 78467 Konstanz (DE)
(72) Erfinder: WINZENBACHER, Monika, D-89233 Neu-Ulm (DE); ISE, Wolfgang, D-78462 Konstanz (DE)
(86) Internationale Anmeldenummer: PCT/EP2000/003048
(87) Internationale Veröffentlichungsnummer: WO 2001/006255

(56) Entgegenhaltungen:
- EP-A- 0 720 020
- DE-U- 29 900 424
- GB-A- 2 239 092
- "Life Science Research Catalog" 2000 , BIO-RAD LABORATORIES XP002140902 in der Anmeldung erwähnt *Produkt Seiten über "The Western Processor"*

## Beschreibung

### Technisches Gebiet

Die Erfindung betrifft eine Vorrichtung zur immunologischen Prozessierung von Analyten an Festphasen.

### Stand der Technik

Bei der immunologischen Prozessierung von Western-blots sind häufig zahlreiche, aufeinanderfolgende Inkubationsschritte mit unterschiedlichen Reagenzienlösungen notwendig. Teilweise sind dabei auch definierte Temperaturen und Inkubationszeiten einzuhalten. Zwischen den Inkubationen mit Reagenzienlösungen sind oftmals zusätzliche Spülschritte erforderlich. Die immunologische Prozessierung von Western-blots ist daher ein sehr zeitaufwendiges Verfahren, das die volle Aufmerksamkeit des Experimentators erfordert. Die automatisierte immunologische Prozessierung von Analyten an Festphasen (z.B. Membranen) ist nach dem derzeitigen Stand der Technik nur in einem sehr eingeschränkten Maße verfügbar. Von der Firma Bio-Rad wird ein Western Processor System vertrieben, das einen großen oder zwei kleine Reagenzienbehälter zur Entwicklung von Western-blots aufweist. Das System ermöglicht das automatische Zuführen oder Abführen von Reagenzienlösungen, die für die Entwicklung der Western-blots benötigt werden. Von der Firma Merck wird ein Färbesystem unter dem Handelsnamen Mirastainer® vertrieben. Das Gerät weist eine bewegliche Halterung für Objektträger auf, die ein Eintauchen des Objektträgers in verschiedene Reagenzienlösungen (in der Regel Färbe- oder Fixierlösungen) ermöglicht. Mit diesen Geräten ist die vollautomatische Durchführung komplexer Analysen und Detektionsverfahren, insbesondere solcher die unterschiedliche Temperaturbedingungen erfordern, nur unzureichend möglich.

### Beschreibung der Erfindung

Aufgabe der Erfindung ist die Bereitstellung einer Vorrichtung die eine vollautomatische Durchführung von immunologischen Prozessierungen von Analyten an Festphasen erlaubt.

Es wurde nun gefunden, daß diese Aufgabe gelöst wird durch eine Vorrichtung, umfassend mindestens drei im wesentlichen parallel zueinander angebrachte Reagenzienbehälter, die jeweils auf einer gleichen Seite eine Öffnung aufweisen, mindestens einen Halter zur Aufnahme der Festphase, Mittel zur horizontalen Bewegung des Halters und Mittel zur vertikalen Bewegung des Halters, wobei die Mittel zur vertikalen und horizontalen Bewegung des Halters ein Absenken der Festphase in einen darunterliegenden Reagenzienbehälter und ein Herausheben der Festphase aus dem Reagenzienbehälter ermöglichen.

Gegenstand der Erfindung ist daher eine Vorrichtung zur immunologischen Prozessierung von Analyten an Festphasen, umfassend mindestens drei im wesentlichen parallel zueinander angebrachte Reagenzienbehälter, die jeweils auf einer gleichen Seite eine Öffnung aufweisen, mindestens einen Halter zur Aufnahme der Festphase, Mittel zur horizontalen Bewegung des Halters und Mittel zur vertikalen Bewegung des Halters, wobei die Mittel zur vertikalen und horizontalen Bewegung des Halters ein Absenken der Festphase in einen darunterliegenden Reagenzienbehälter und ein Herausheben der Festphase aus dem Reagenzienbehälter ermöglichen.

Weitere Gegenstände der Erfindung sind in den Unteransprüchen enthalten.

Erfindungsgemäß wird unter immunologischer Prozessierung bevorzugt die Detektion von Analyten in Form von Antigenen mittels spezifischer Antikörper verstanden.

Unter Analyten werden im Zusammenhang mit der Erfindung organische Moleküle wie Proteine, Lipide oder Oligosaccharide sowie deren Fragmente verstanden. Diese können beispielsweise isoliert auf einer festen Phase oder als Bestandteil eines Gewebeschnittes vorliegen.

Unter Festphasen werden im Zusammenhang mit der Erfindung zweckmäßigerweise Membranen, wie beispielsweise Membranen aus Nitrocellulose, PVDF, Nylon oder Cellulose, Dünnschicht Chromatographie (DC) Platten, wie beispielsweise HPTLC Platten oder Objektträger jeglicher Bauart verstanden. Erfindungsgemäß bevorzugt sind Membranen oder DC Platten.

Erfindungsgemäß handelt es sich bei den Reagenzienbehältern um Behälter aus Materialien die gegen eine Vielzahl von Lösungsmitteln, wie beispielsweise verdünnte Säuren und Laugen oder organische Lösungsmittel, beständig sind. Ferner sind die Reagenzienbehälter vorzugsweise von guter Wärmeleitfähigkeit. Dies ermöglicht eine Temperierung bei individuellen Prozeßschritten bei der immunologischen Prozessierung. Geeignete Materialien sind beispielsweise Glas oder Edelstahl. In Geometrie und Dimension sind die Reagenzienbehälter der Festphase angepaßt und ermöglichen vorzugsweise eine vollständige Aufnahme der Festphase durch die Öffnung in das Behältnis, wobei eine ausreichende Benetzung der Festphase mit Reagenzienlösung bei möglichst geringem Reagenzienvolumen gewährleistet ist. Dies hat den Vorteil, daß nur geringe Mengen der oft sehr teuren Reagenzienlösungen (z.B. Antikörperlösungen) eingesetzt werden müssen. Als zusätzliches Merkmal können ein oder mehrere der Reagenzienbehälter über Öffnungen mit Schläuchen verbunden sein. Vorzugsweise handelt es sich bei den mit Schläuchen verbundenen Öffnungen um Bohrungen am Boden der Reagenzienbehälter. Dies ermöglicht das Zuführen oder Entfernen von Reagenzlösungen bzw. Spüllösungen in den Reagenzienbehältern. Das Zuführen oder Entfernen von Reagenzienlösungen kann mit Hilfe geeigneter Pumpen aus geeigneten Vorratsbehältem bzw. in geeignete Abfallbehälter bewerkstelligt werden. Dies ermöglicht insbesondere eine intensive Spülung der Festphasen zwischen verschiedenen Inkubationsschritten bei der immunologischen Prozessierung, wodurch beispielsweise unerwünschte Kontaminationen der Inkubationsreagenzien vermieden werden.

Erfindungsgemäß sind mindestens drei Reagenzienbehälter vorhanden, bevorzugt mehr als drei, besonders bevorzugt vier bis zwölf. Durch das Vorhandensein einer ausreichenden Anzahl von Reagenzienbehättern kann jede benötigte Reagenzienlösung in einem separaten Reagenzienbehälter untergebracht werden. Das Reinigen von Reagenzienbehältern während der immunologischen Prozessierung, wie es bei den Systemen aus dem Stand der Technik erforderlich ist, kann damit bei der erfindungsgemäßen Vorrichtung entfallen. Dies hat weiterhin den Vorteil, daß es möglich ist, die eingesetzten Reagenzienlösungen innerhalb eines Verfahrens mehrfach zu benutzen und so Reagenzienlösung einzusparen.

Bei der Halterung für die Aufnahme der Festphase handelt es sich vorzugsweise um einen Rahmen in dem die Festphase fixiert werden kann. Gewünschtenfalls können auch zwei oder mehrere Festphasen gleichzeitig mit der Halterung verbunden werden. Für die Herstellung des Rahmens eignen sich insbesondere Materialien die inert sind gegen die bei der immunologischen Prozessierung eingesetzten Reagenzienlösungen. Als beispielhafte Materialien seien Edelstahl oder auch Kunststoffe wie Teflon oder PVC genannt. Für die Fixierung von Membranen eignet sich insbesondere ein flacher Edelstahlkäfig. Für die DC-Platten eignet sich insbesondere ein Edelstahlrahmen, der gewünschtenfalls so dimensioniert sein kann, daß zwei DC Platten gleichzeitig prozessiert werden können.

Die Halterung ist vorzugsweise lösbar mit dem Mittel zur horizontalen Bewegung der Halterung und dem Mittel zur vertikalen Bewegung verbunden. Die Befestigung mit dem Mittel zur vertikalen Bewegung der Halterung erfolgt bevorzugt über Befestigungsmittel wie Schrauben, Schnappverbindungen oder über Magnetverbindungen.

Bei dem Mittel zur horizontalen Bewegung der Halterung handelt es sich vorzugsweise um einen horizontalen Linearantrieb mit Schrittmotor.

Bei dem Mittel zur vertikalen Bewegung der Halterung handelt es sich vorzugsweise um einen vertikalen Linearantrieb mit Schrittmotor.

Die Mittel zur vertikalen und horizontalen Bewegung der Halterung sind gewünschtenfalls lösbar miteinander verbunden.

Die Mittel zur horizontalen und vertikalen Bewegung der Halterung ermöglichen, daß die Reagenzienbehälter in beliebiger Reihenfolge von dem Halter mit der Festphase angesteuert werden können und die Festphase in die gewünschten Reagenzienbehälter abgesenkt bzw. herausgehoben werden kann. Bevorzugt ist auch eine Bewegung der Halterung mit der Festphase im Reagenzienbehälter möglich.

In einer anderen Ausführungsform der Erfindung können die Festphase und/oder die Halterung mit der Festphase im Reagenzienbehälter abgelegt werden, d.h. während der Prozessierung im Reagenzienbehälter sind die Festphase und/oder die Halterung mit der Festphase nicht mit den Mitteln zur horizontalen und vertikalen Bewegung verbunden. Eine solche Vorrichtung eignet sich zur simultanen Prozessierung von bis zu acht, vorzugsweise bis zu vier Festphasen in gleichen und/oder verschiedenen Reagenzienbehältern. Durch die Mittel zur horizontalen und vertikalen Bewegung können verschiedene Halterungen mit Festphasen bevorzugt nacheinander aufgenommen, zu entsprechenden Reagenzienbehältem transportiert, in entsprechende Reagenzienbehälter abgelegt und/oder von dort wieder entnommen werden und gewünschtenfalls zu einem weiteren Reagenzbehälter transportiert werden. In diesem Fall weist die Vorrichtung vorzugsweise zusätzliche Mittel auf, die eine Bewegung der in den Reagenzbehältern abgelegten Festphase bzw. Festphase mit Halterung im Reagenzienbehälter ermöglicht. Die Bewegung der Halterungen oder Festphasen in den jeweiligen Reagenzienbehältern kann beispielsweise durch Rotation von seitlich an den Reagenzienbehältern angebrachten Nockenwellen oder Stege, die zur exakten Positionierung Einkerbungen aufweisen, bewerkstelligt werden. Die Stege können dann beispielsweise über einen Extender auf und ab bewegt werden. Die Nockenwellen bzw. Stege können beispielsweise die Halterungen der Festphasen lösbar aufnehmen und bewegen.

Durch die Prozessführung der immunologischen Prozessierung der Festphase in der erfindungsgemäßen Vorrichtung wird unter Ausnutzung der Schwerkraft, im Vergleich zu der aus dem Stand der Technik bekannten Prozeßführung, beim Wechsel der jeweiligen Reagenzienbehälter eine bessere Abtrennung (Abtropfen) der Reagenzienflüssigkeit von der Festphase ermöglicht.

Insgesamt wurde überraschenderweise festgestellt, daß mit der erfindungsgemäßen Vorrichtung die Reproduzierbarkeit und somit die Qualität der immunologischen Prozessierung verbessert wird.

Die Vorrichtung kann weiterhin Steuerplatinen zur Steuerung der Funktionen der Vorrichtung aufweisen. Zweckmäßigerweise besitzt das Gerät eine Schnittstelle zur Verbindung mit einem PC, der mit Hilfe einer geeigneten Software die Steuerung der Vorrichtung ermöglicht. Nach Vorbereitung des Gerätes und Eingabe eines gewünschten Ablaufprogramms kann die immunologische Prozessierung der Festphase automatisch erfolgen, ohne daß eine weitere Kontrolle durch den Experimentator erforderlich ist. Die erfindungsgemäße Vorrichtung ermöglicht automatisch die freie Kombination folgender Parameter: Anzahl der Reagenzienbehälter, Reihenfolge der Ansteuerung der Reagenzienbehälter, Verweildauer der Festphase in dem Reagenzienbehälter, gewünschtenfalls Einstellung der Temperatur der Reagenzienbehälter, Frequenz der Vertikalbewegung der Halterung im Reagenzienbehälter, gewünschtenfalls Durchführung von Spülzyklen. Alle Prozesse können ferner beliebig wiederholt und frei miteinander kombiniert werden. Gewünschtenfalls kann mit Hilfe der Software auch ein Protokoll erstellt werden, das den Ablauf der immunologischen Prozessierung dokumentiert. Dies hat insbesondere Bedeutung im Zusammenhang mit der Durchführung von analytischen Prozessen bei GLP, GMP und GCP.

Gewünschtenfalls kann die erfindungsgemäße Vorrichtung auch Mittel zur Detektion der Analyten nach erfolgter Prozessierung aufweisen. Beispielsweise kann die Festphase für den Nachweis eines Lumineszenzsignals in einem als Dunkelkammer fungierenden Behältnis abgelegt werden, in dem sich auch ein CCD (Charge Coupled Device) Chip befindet. Die Bildanalyse und Quantifizierung der Lumineszenzreaktion kann dann mittels geeigneter Software im PC der zur Steuerung der Vorrichtung verwendet wird, durchgeführt werden..

Anhand der Zeichnungen werden zwei beispielhafte Ausführungsformen der Erfindung wie folgt näher erläutert.

Es zeigen:
Fig. 1 eine Perspektivdarstellung einer ersten Ausführungsform, gesehen von vome, oben und von einer End-Seite einer erfindungsgemäßen Vorrichtung zur immunologischen Prozessierung von Analyten an Festphasen.
Fig. 2 die Vorrichtung nach Fig. 1 jedoch ohne vordere Verkleidung.
Fig. 3 die Teildarstellung der Vorrichtung nach Fign. 1 und 2, gesehen von der Rückseite oben und der anderen End-Seite.

Fig. 4 eine Perspektivdarstellung einer weiteren Ausführungsform einer erfindungsgemäßen Vorrichtung zur immunologischen Prozessierung von Analyten an Festphasen, gesehen von vorne, oben und von einer End-Seite.

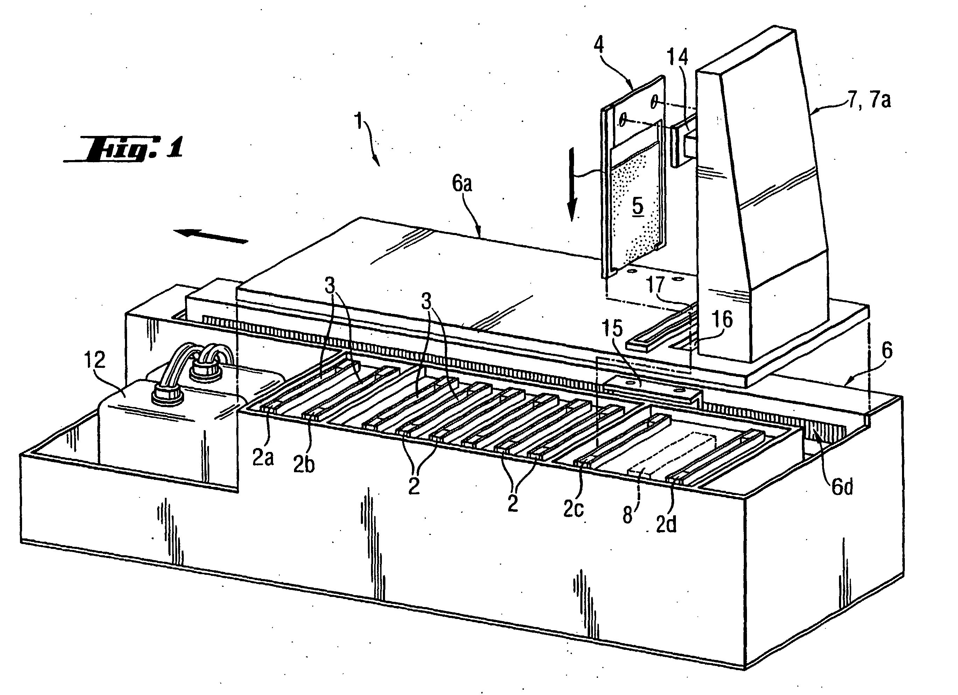

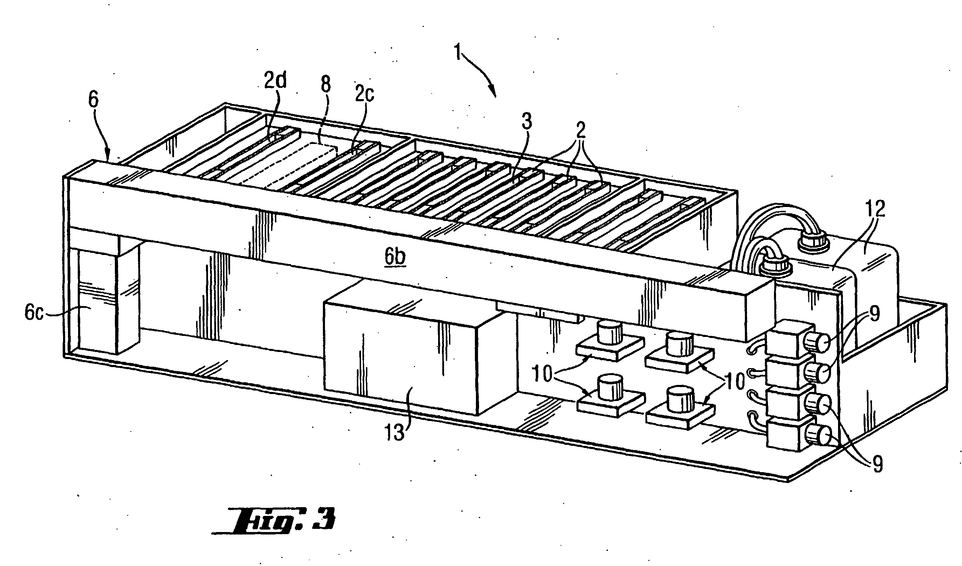

Die in den Fign. 1 - 4 dargestellten erfindungsgemäßen Vorrichtungen 1 sind als kompakte Laborgeräte konzipiert. Beim Bau der Geräte wurden die folgenden Gerätekomponenten verwendet: Reagenzienbehälter 2, die eine Öffnung 3 aufweisen, eine Halterung 4 zur Aufnahme der Festphase 5, Mittel 6 zur horizontalen Bewegung der Halterung 4 in Form eines Schlittens 6a und Linearantriebs 6b mit Schrittmotor .6c, Mittel 7 zur vertikalen Bewegung der Halterung in Form eines Lifts 7a mit Schrittmotor 7b, Peltieretemente 8 zum Heizen und Kühlen von Reagenzienbehältern 2, Pumpen 9 und Schlauchventile 10 zum Befüllen und Entleeren der Reagenzienbehälter, einen Lüfter 11 und Behälter 12 mit Spüllösung. Die Vorrichtung 1 weist weiterhin ein Netzteil 13 und eine Schnittstelle zur Verbindung mit einem PC auf. Mit Hilfe einer geeigneten Software wird der Betrieb der Vorrichtung gesteuert. Im Folgenden werden die einzelnen Komponenten detailliert beschrieben:

Bei der vorliegenden Vorrichtung gemäß Fign. 1-3 sind insgesamt 10 Reagenzienbehälter 2 in Form von Glaskammern (ca. 12 x 12 x 1 cm) linear in Abständen von ca. 3 cm nebeneinander angeordnet. Die Öffnungen 3 mit einer Dimensionierung von 11 cm x 0,4 - 0,8 cm sind zum Einlass von 40 bis 110 ml Reagenzien- oder Spüllösung geeignet. Zwei Reagenzienbehälter 2a, 2b weisen spezielle Konstruktionsmerkmale auf und dienen vorzugsweise als Spülkammern. Die Spülkammern haben am Boden spezielle Bohrungen, durch die über Schläuche Spülflüssigkeit für Spülschritte eingefüllt werden kann. Die Befüllung der Kammern mit der Spüllösung erfolgt durch Pumpen 9. Diese können aus einem Vorratsbehälter 12 die entsprechenden Reagenzienbehälter 2a, 2b füllen bzw. nach erfolgter Spülung die entsprechenden Reagenzienbehälter 2a, 2b auch wieder entleeren. Jeder der beiden Reagenzienbehälter ist mit einer eigenen Pumpe für die Befüllung und einer eigenen Pumpe für die Entleerung verbunden und jeweils an einen eigenen Vorratsbehälter angeschlossen. Dadurch lassen sich Kreuzkontaminationen verhindern. Zwei weitere Reagenzienbehälter 2c, 2d sind thermostatisierbar ausgestaltet. Dazu weist die Vorrichtung zwischen den Reagenzienbehältern 2c, 2d einen Wärmetauscher mit Peltierelementen 8 und einen Lüfter 11 auf. Die Reagenzienbehälter 2c, 2d sind mit einem geeigneten Material isoliert. Die Reagenzienbehälter 2c, 2d können so über einen Temperaturbereich von 0 - 50° C thermostatisiert werden.

Die Halterung 4 für die Festphase 5 ist in Form eines Edelstahlrahmens ausgestaltet und ist über Schrauben lösbar mit einer Aufnahme 14 mit einem Lift 7a verbunden. Der Lift 7a ermöglicht über einen Schrittmotor 7b die Bewegung des Halters 4 und der Festphase 5 in vertikaler Richtung. Der Lift 7a ist auf einem Schlitten 6a angebracht und der Schlitten über eine Aufnahme 15 mit einem horizontalen Linearantrieb 6b mit Schrittmotor 6c verbunden. Der Schlitten 6a, der gleichzeitig die Funktion einer Abdeckung der Reagenzienbehälter übernimmt, weist einen Durchtritts- und Führungsspalt 16 (Fig. 1) auf, durch den der Halter 4 mit der Festphase 5 in einen darunterliegenden Reagenzienbehälter 2 abgesenkt werden kann. Eine auf dem Schlitten angebrachte Tropfenauffangwanne 17 verhindert, daß nach der Herausnahme der Halterung 4 abtropfende Reagenzienlösung in darunterliegende Reagenzienbehälter 2 tropft. Der Linerarantrieb 6b und der Lift 7a ermöglichen, daß die Reagenzienbehälter 2 in beliebiger Reihenfolge angesteuert werden können und die Festphase 5 in die gewünschten Reagenzienbehälter 2 abgesenkt bzw. herausgehoben werden kann. Die Mechanik des Lifts 7a ermöglicht weiterhin eine Auf- und Abwärtsbewegung der Halterung 4 mit der Festphase in dem Reagenzienbehälter. Auf diese Weise wird ein intensiver Austausch der Festphasenoberfläche, die den Analyten trägt, mit der Reagenzienlösung in dem Reagenzienbehälter 2 ermöglicht. Die Frequenz der vertikalen Bewegung kann über die Gerätesoftware variabel gesteuert werden (z.B. Frequenz von 1 - 20 Auf-/Abbewegungen /min).

An einem Ende des Schlittens 6a ist eine auf einer Rolle aufgewickelte Folie (die Breite der Folie entspricht ungefähr der des Schlittens) befestigt (in der Zeichnung nicht dargestellt). Bei einer Linearbewegung des Schlittens 6a wird die Folie hinter dem Schlitten 6a von der Rolle gezogen und durch den Schlitten 6a nicht mehr abgedeckte, freiliegende Reagenzienbehälter werden durch die Folie abgedeckt. Bei einer Bewegung des Schlittens 6a in Ausgangsposition rollt sich die Folie wieder auf die Rolle auf.

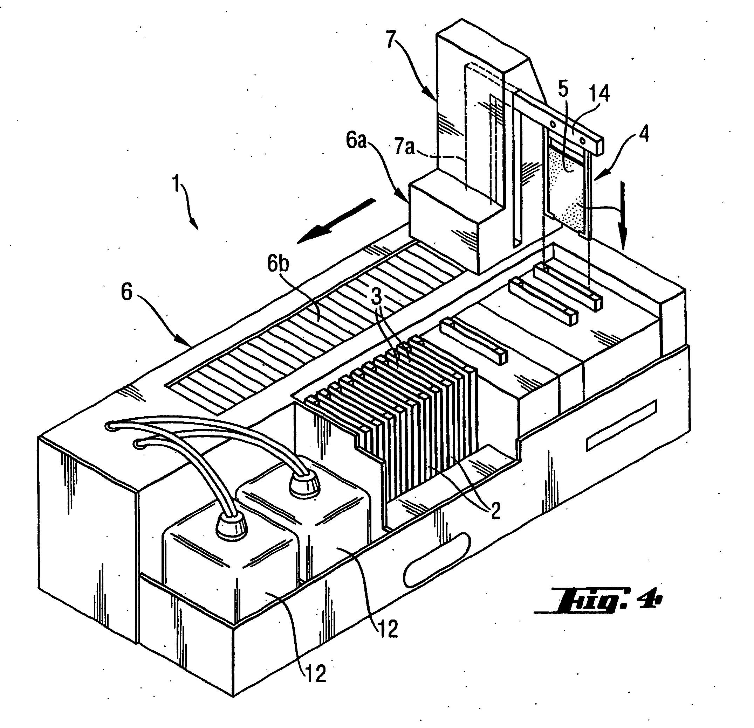

Alternativ kann der Schlitten 6a, wie in der Vorrichtung gemäß Fig. 4 gezeigt, seitlich neben den Reagenzienbehältern angebracht sein.

Insgesamt können somit folgende Parameter frei miteinander kombiniert werden: Anzahl und Reihenfolge der für die Prozessierung nötigen Reagenzienbehälter, Steuerung der Temperatur bei 2 der 10 Kammern, Frequenz der Vertikalbewegung, Verweildauer in jeder einzelnen Kammer, Anzahl von Spülzyklen in den beiden Spülkammern. Alle Prozesse können femer beliebig wiederholt und frei miteinander kombiniert werden.

Neben der immunologischen Prozessierung von Membranen eignet sich die erfindungsgemäße Vorrichtung 1 insbesondere auch zur immunologischen Prozessierung von DC-Platten. Die WO9743313 beschreibt die manuelle immunologische. Prozessierung von DC Platten nach Durchführung einer dünnschichtchromatographischen Trennung.

Zur Vorbereitung auf die immunologische Detektion durch die erfindungsgemäße Vorrichtung 1 werden beispielsweise DC-Platten nach Durchführung einer dünnschichtchromatographischen Trennung (z.B. wie in der WO9743313 beschrieben) einer Analytenprobe getrocknet. Zur Absättigung unspezifischer Bindungsstellen werden die Platten in einer Lösung mit einer geeigneten Blockierlösung, z. B. Gelatine oder Proteine, inkubiert. Die Platten werden dann mit dem primären Antikörper inkubiert. Trägt dieser keine Markierung, kann die Detektion mit Hilfe eines markierten zweiten Antikörpers erfolgen. Für die Detektion können alle gängigen Detektionsverfahren angewandt werden. Nach Entfemen von überschüssigem erstem Antikörper durch Waschen wird mit einem markierten sekundären Antikörper inkubiert. Nach dem Waschen werden die markierten Antikörper detektiert. Deren Visualisierung erfolgt auf übliche Weise, z. B. durch Zusatz von Luminol und Wasserstoffperoxid, beispielsweise unter Zuhilfenahme des ECL (Enhanced Chemiluminescence)-Detektionsverfahrens der Firma Amersham Buchler, welches sehr sensitiv ist.

Im folgenden wird die Erfindung exemplarisch anhand eines Verfahrens zur Quantifizierung des Lungsurfactantproteins SP-C beschrieben. Für dieses Verfahren wurde eine Vorrichtung gemäß den Figuren 1-3 verwendet.

### Beispiele

### 1. Probenvorbereitung und Dünnschichtchromatographie (TLC)

Für die Dünnschichtchromatographie wurden HPTLC-Platten mit einer veränderten Silica-Matrix, wie sie von der Firma Merck Darmstadt unter dem Handelsnamen Diol vertrieben werden, benutzt. Das Auftragen der Proben auf die HPTLC-Platten wurde automatisch unter Benutzung eines Linomat IV (Camag, Berlin) ausgeführt. Nach dem Probenauftrag wurden die Platten luftgetrocknet und ein der Chromatographie unter Benutzung einer CHCl₃:MeOH-Mischung [CHCl₃/MeOH/25 %ige NH₄OH/H₂O = 32,5/15/1/2 (Volumenverhältnis)] als flüssige Phase unterworfen. Nach der Chromatographie wurden die Platten getrocknet

### 2. Immunodetektion des Surfactantproteins SP-C mit SP-C-Antikörpern unter Verwendung des Immunoprozessors

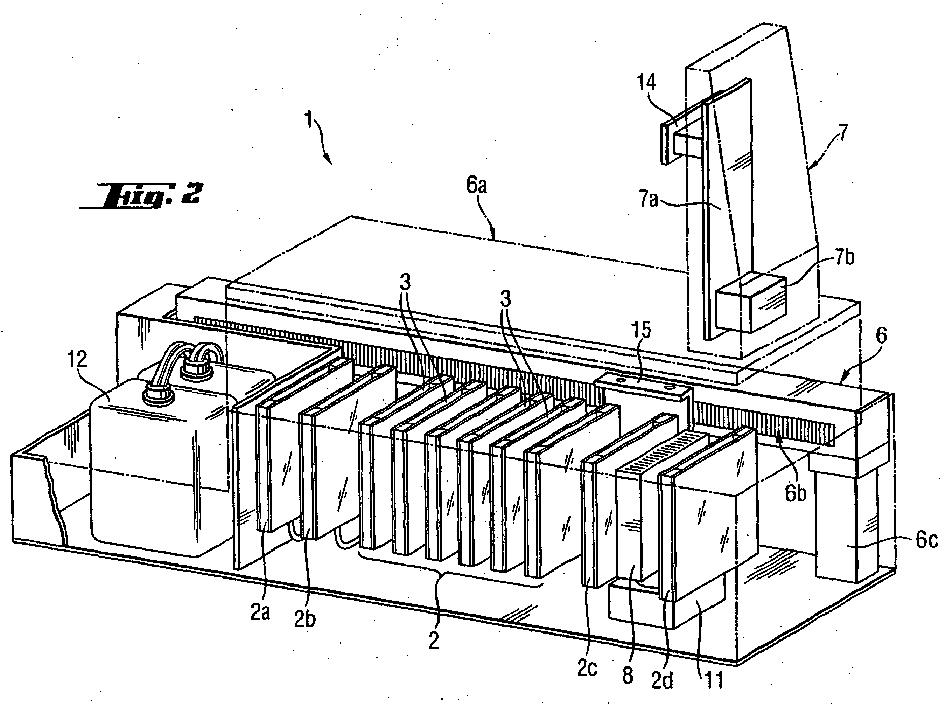

Zur Absättigung von unspezifischen Bindungsstellen wurden die getrockneten HPTLC-Platten für 3 Stunden mit 3 %iger Fischgelatine in PBS, die 150 mM NaCl, 12 mM Na₂HPO₄ und 3 mM NaH₂PO₄ (pH 7,4) enthielt, in Kammer 5 (Zählweise von links nach rechts in der Vorrichtung gemäß Fig. 1 und 2; Volumen 90 ml, Festphasenbewegung im Reagenzienbehälter 4x/min) bei 20°C inkubiert. Danach wurden die Platten 12 Stunden in Kammer 10 (Volumen 40 ml, Festphasenbewegung im Reagenzienbehälter 4x/min) bei 4° C in Gegenwart des primären Antikörpers (SP-C Antikörper) bei einer Verdünnung von 1:10.000 inkubiert. Ungebundene Antikörper wurden durch mehrmaliges Waschen mit TBS/T aus 4 mM Tris-HCl, 100 mM NaCl, 0,05 % Tween-20 (pH 7,4) in (Spül)Kammer 1 unter Verwendung von 140 ml Puffer entfernt. Zur Hybridisierung mit dem Primärantikörper wurden die Platten 2 Stunden mit Meerrettichperoxidase konjugiertem Sekundärantikörper bei einer Verdünnung von 1:80.000 im TBS/T in 40 ml Lösung in Kammer 8 (Festphasenbewegung im Reagenzienbehälter von 4x/min) bei 15°C inkubiert. Ungebundene Antikörper wurden wie oben beschrieben durch mehrmaliges Waschen der Platten mit TBS/T in (Spül)Kammer 2 entfernt. Immunreaktive Komplexe wurden unter Verwendung des ECL-Detektionssystems von Amersham Buchler nach einer 5 min. Substratinkubation in Kammer 8 ohne Festphasenbewegung im Reagenzienbehälter inkubiert. Nach Beendigung aller Inkubationen wurden die Platten aus der Apparatur genommen und 1 - 10 min einem Röntgenfilm (Hyperfilm Amersham) exponiert.

### 3. Digitalisierung der Röntgenfilme und Computerauswertung

Zur Quantifizierung der Immunkomplexe wurden die Röntgenfilme mit einem Flachbettscanner mit Durchlichtaufsatz (HP ScanJet 4 C, Hewlett Packard) digitalisiert. Die Signalintensitäten auf den Röntgenfilmen wurden durch Computerauswertung unter Benutzung der Densitometer-Software Aida (Raytest) ausgewertet.

## Patentansprüche

1. Vorrichtung (1) zur immunologischen Prozessierung von Analyten an Festphasen (5) umfassend mindestens drei im wesentlichen parallel zueinander angebrachte Reagenzienbehälter (2) für Reagenzien und Spüllösungen, die jeweils auf einer gleichen Seite eine Öffnung (3) aufweisen, mindestens einer Halterung (4) zur Aufnahme der Festphase (5), Mittel (6) zur horizontalen Bewegung der Halterung (4) und Mittel (7) zur vertikalen Bewegung der Halterung (4), wobei die Mittel (6, 7) zur vertikalen und horizontalen Bewegung der Halterung (4) ein Absenken der Festphase (5) in einen darunterliegenden Reagenzienbehälter (2) und ein Herausheben der Festphase (5) aus dem Reagenzienbehälter (2) ermöglichen.

2. Vorrichtung nach Anspruch 1, wobei es sich bei den Mitteln (7) zur vertikalen Bewegung der Halterung (4) um einen Lift (7a) mit Schrittmotor (7b) handelt.

3. Vorrichtung nach Anspruch 2, wobei es bei den Mitteln (6) zur horizontalen Bewegung um einen Schlitten (6a) handelt, der mit einem horizontalen Linearantrieb (6b) mit Schrittmotor (6c) verbunden ist und der Lift (7a) auf dem Schlitten (6a) angebracht ist.

4. Vorrichtung nach Anspruch 3, wobei der Schlitten (6a) einen Durchtritts- und Führungsspalt (16) für die Halterung (4) und eine Tropfenauffangwanne (17) aufweist.

5. Vorrichtung nach Anspruch 1, wobei mindestens einer der Reagenzienbehälter (2) mit einem Schlauch für die Zuführung und/oder Ableitung einer Reagenzienlösung versehen ist.

6. Vorrichtung nach Anspruch 1, wobei zusätzlich mindestens ein Vorratsbehälter (12) für Reagenzien- oder Spüllösungen vorhanden ist.

7. Vorrichtung nach Anspruch 1, wobei zusätzlich Mittel (8, 11) zur Thermostatisierung eines oder mehrerer der Reagenzienbehälter (2) vorhanden sind.

8. Vorrichtung nach Anspruch 1, wobei es sich bei der Halterung (4) um einen Rahmen handelt, in den die Festphase (5) eingesetzt und fixiert werden kann.

9. Vorrichtung nach Anspruch 8, wobei es sich bei der Festphase (5) um eine Membran, DC Platte, oder einen Objektträger handelt.

10. Vorrichtung nach Anspruch 8, wobei es sich bei der Membran um eine Membran aus Nitrocellulose, PVDF oder Cellulose handelt.

## Claims

1. Device (1) for the immunological processing of analytes on solid phases (5) comprising at least three reagent containers (2) mounted essentially parallel to one another for reagents and rinsing solutions, which in each case have an opening (3) on an identical side, at least one holder (4) for containing the solid phase (5), means (6) for the horizontal movement of the holder (4) and means (7) for the vertical movement of the holder (4), the means (6, 7) for the vertical and horizontal movement of the holder (4) making possible a lowering of the solid phase (5) into a reagent container (2) lying underneath and a lifting of the solid phase (5) out of the reagent container (2).

2. Device according to Claim 1, the means (7) for the vertical movement of the holder (4) being a lift (7a) having a stepped motor (7b).

3. Device according to Claim 2, the means (6) for the horizontal movement being a sliding carriage (6a), which is connected to a horizontal linear drive (6b) having a stepped motor (6c) and the lift (7a) being mounted on the sliding carriage (6a).

4. Device according to Claim 3, the sliding carriage (6a) having a gap (16) for the passage and guidance of the holder (4) and a drop collecting trough (17).

5. Device according to Claim 1, at least one of the reagent containers (2) being provided with tubing for the supply and/or drawing off of a reagent solution.

6. Device according to Claim 1, at least one storage container (12) for reagent or rinsing solutions additionally being present.

7. Device according to Claim 1, means (8, 11) for the thermostatting of one or more of the reagent containers (2) additionally being present.

8. Device according to Claim 1, the holder (4) being a frame into which the solid phase (5) can be inserted and fixed.

9. Device according to Claim 8, the solid phase (5) being a membrane, TLC plate, or a slide.

10. Device according to Claim 8, the membrane being a membrane made of nitrocellulose, PVDF or cellulose.

## Revendications

1. Dispositif (1) pour le traitement immunologique d'analytes sur des phases solides (5), comprenant au moins trois récipients pour réactifs (2) disposés sensiblement parallèles les uns aux autres pour des réactifs et des solutions de lavage et présentant respectivement sur un même côté une ouverture (3), au moins un support (4) destiné à recevoir la phase solide (5), des moyens (6) pour déplacer horizontalement le support (4) et des moyens (7) pour déplacer verticalement le support (4), dans lequel les moyens (6, 7) pour déplacer verticalement et horizontalement le support (4) permettent de faire descendre la phase solide (5) dans un récipient de réactif (2) situé en dessous et de faire remonter la phase solide (5) hors du récipient de réactif (2).

2. Dispositif selon la revendication 1, dans lequel les moyens (7) pour déplacer verticalement le support (4) sont un ascenseur (7a) avec moteur pas à pas (7b).

3. Dispositif selon la revendication 2, dans lequel les moyens (6) pour le déplacement horizontal sont un chariot (6a) qui est relié à un entraînement linéaire (6b) avec moteur pas à pas (6c) et l'ascenseur (7a) est monté sur le chariot (6a).

4. Dispositif selon la revendication 3, dans lequel le chariot (6a) présente une fente de passage et de guidage (16) pour le support (4) et une cuvette de récupération de gouttes (17).

5. Dispositif selon la revendication 1, dans lequel l'un au moins des récipients pour réactifs (2) est muni d'une tubulure d'alimentation et/ou évacuation d'une solution de réactif.

6. Dispositif selon la revendication 1, dans lequel il est prévu en outre un récipient réservoir (12) pour des solutions de réactifs ou de lavage.

7. Dispositif selon la revendication 1, dans lequel il est prévu en outre des moyens (8, 11) pour thermostater un ou plusieurs des récipients pour réactifs (2).

8. Dispositif selon la revendication 1, dans lequel le support (4) est un cadre dans lequel la phase solide (5) peut être introduite et fixée.

9. Dispositif selon la revendication 8, dans lequel la phase solide (5) est une membrane, une plaque de CCM (DC Platte) ou une lamelle porte-objet.

10. Dispositif selon la revendication 8, dans lequel la membrane est une membrane en nitrocellulose, en PVDF ou en cellulose.
